# EUROPEAN PATENT APPLICATION

(11) **EP 2 922 251 A1**
(43) Date of publication of application: **23.09.2015**
(21) Application number: 12889397.1
(22) Date of filing: 09.12.2012
(51) Int. Cl.: H04L 12/723

(54) **PACKET FORWARDING METHOD, DEVICE AND DATA CENTER NETWORK**

(71) Applicant: Huawei Technologies Co., Ltd., Longgang District Shenzhen, Guangdong 518129 (CN)
(72) Inventor: LI, Yizhou, Shenzhen Guangdong 518129 (CN); HAO, Weiguo, Shenzhen Guangdong 518129 (CN)
(74) Representative: Körber, Martin Hans
(86) International application number: PCT/CN2012/086240
(87) International publication number: WO 2014/086047

(57) **Abstract**

The present invention provides a packet forwarding method and apparatus, and a data center network, and is applied in the field of communications. The data center network includes two tenant end systems, a local management function, and a network virtualization edge. The local management function sends, to the network virtualization edge, a packet to which a label is added and that is sent by a tenant end system, and the network virtualization edge determines, according to the label, a virtual overlay network identifier corresponding to the tenant end system, adds the virtual overlay network identifier to the packet, performs tunnel encapsulation on the packet to which the virtual overlay network identifier is added, and sends a packet that is after the tunnel encapsulation to another network virtualization edge. According to the present invention, the network virtualization edge is separated from a server at which the local management function is located, which reduces load of the server and improves performance of the data network center.

## Description

### TECHNICAL FIELD

The present invention relates to the field of communications technologies, and in particular, to a packet forwarding method and apparatus, and a data center network.

### BACKGROUND

A large-scale data center network generally needs to support multiple tenants. The tenants here mainly refer to enterprise users with a communication need. Each tenant has a quantity of network devices and terminals. For information security, a data center is required to support traffic isolation between individual tenants, so that traffic of a tenant is not seen by another tenant. To implement this tenant-based traffic isolation, at present, an emerging method is using an overlay network (overlay) based network virtualization technology. A basic idea of the method is that each tenant or each VLAN or subnet of each tenant is corresponding to a virtual overlay network (Virtual overlay Network, VN), each VN has its own virtual overlay network identifier VNID, and data can only be transferred between tenant ends with a same VNID, and therefore, the traffic isolation can be implemented. The VNID is generally a relatively long field, such as 24 bits, and is used to uniquely identify a VN.

A device connecting a virtual overlay network and another network or terminal is called a network virtualization edge (Network Virtualization Edge, NVE), where a main function of the network virtualization edge is concealing real address information of a tenant. A tenant end system (Tenant End System, TES) accesses a virtual overlay network by using different NVEs, where the TES may include a virtual machine (Virtual Machine, VM) or another physical device.

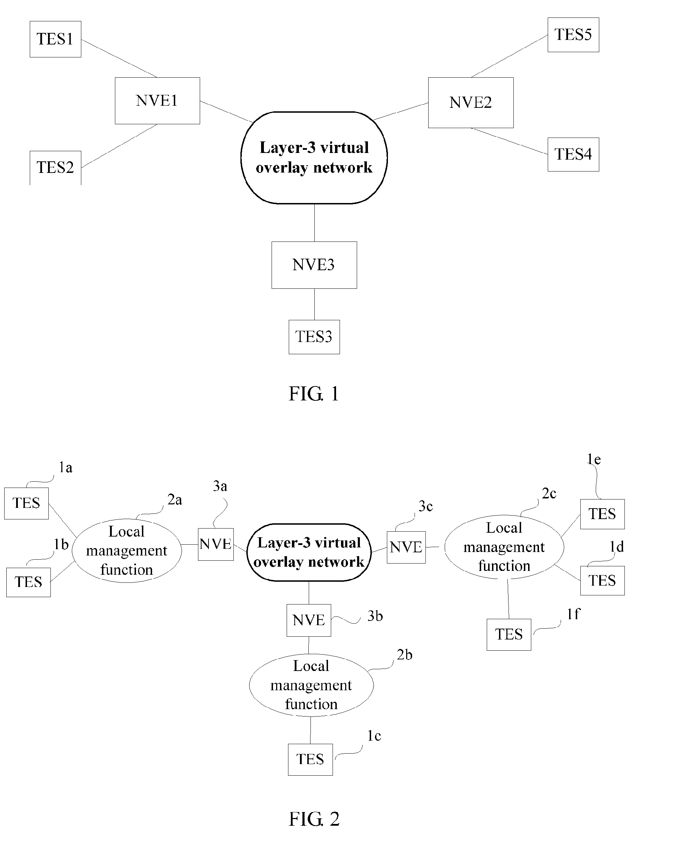

As shown in FIG. 1, FIG. 1 is a schematic structural diagram of a data center network based on a layer-3 virtual overlay network in the prior art. Each TES accesses a virtual overlay network separately by using its own NVE. When a TES 1 needs to send a packet to a TES 3 that belongs to a same VN as the TES 1, the TES 1 sends a packet whose source address is the TES 1 and a destination address is the TES 3. When the packet arrives at an NVE 1 connected to the TES 1, the NVE 1 finds, according to a mapping relationship that is between a TES address and an NVE address and that is obtained in advance, an NVE corresponding to the TES 3, that is, an NVE 2. The NVE 1 encapsulates the packet, where a source address of an encapsulated packet is an address of the NVE 1, a destination address of the encapsulated packet is an address of the NVE 2, and a header of the encapsulated packet includes information of a VNID. The NVE 1 sends the encapsulated packet to the NVE 2, and the NVE 2 decapsulates the encapsulated packet to retrieve the packet, and sends the retrieved packet to the TES 3.

When a logical function of an NVE is undertaken by a system management program (Hypervisor) of a server, in a data center, a quantity of NVEs is the same as a quantity of servers. The Hypervisor is generally implemented by software, and when running a protocol with heavy load and implementing encapsulation and decapsulation functions, occupies a large number of system resources of the server, which may result in performance degradation of the server. When performance of a large number of servers in a data center network is degraded, performance of the entire data center network is inevitably degraded.

### SUMMARY

In view of this, embodiments of the present invention provide a packet forwarding method and apparatus, and a data center network, so as to improve performance of the data center network.

A first aspect of the present invention provides a packet forwarding method, including:
receiving a first packet sent by a first tenant end system, where a destination address of the packet is an address of a second tenant end system, and the first tenant end system and the second tenant end system are corresponding to different network virtualization edges;
adding a label to the first packet, where the label is used to indicate a virtual overlay network to which the tenant end system belongs; and
sending the first packet to which the label is added to a network virtualization edge corresponding to the first tenant end system.

According to a first implementation manner of the first aspect of the present invention, the adding a label to the first packet includes:
searching an identifier mapping table to acquire a virtual overlay network identifier VNID that is corresponding to the first tenant end system and that is in the identifier mapping table, and adding the acquired VNID as a label to the first packet, where the identifier mapping table includes a correspondence between a tenant end system identifier TESID and a virtual overlay network identifier VNID.

According to a second implementation manner of the first aspect of the present invention, the adding a label to the first packet includes:
searching a label mapping table to acquire a label corresponding to the first tenant end system, and adding the label to the first packet, where the label mapping table includes a correspondence between the tenant end system identifier TESID and a label.

With reference to the foregoing first and second implementation manners of the first aspect of the present invention, in a third implementation manner of the first aspect of the present invention, the adding a label to the first packet includes: adding the label directly to a packet header of the first packet;
the sending the first packet to which the label is added to a network virtualization edge corresponding to the first tenant end system includes: sending, according to layer-2 forwarding without tunneling, the first packet to which the label is added to the network virtualization edge corresponding to the first tenant end system.

With reference to the foregoing first and second implementation manners of the first aspect of the present invention, in a fourth implementation manner of the first aspect of the present invention, the adding a label to the first packet includes: performing tunnel encapsulation on the first packet, and adding the label to a first packet that is after the tunnel encapsulation;
the sending the first packet to which the label is added to a network virtualization edge corresponding to the first tenant end system includes: sending, according to a tunnel based forwarding manner, the first packet to which the label is added to the network virtualization edge corresponding to the first tenant end system.

With reference to each foregoing implementation manner of the first aspect of the present invention, the method of the first aspect of the present invention further includes:
receiving a second packet sent by the network virtualization edge, where the second packet carries the label; a source address of the second packet is the second tenant end system, and a destination address of the second packet is the first tenant end system;
processing the second packet to obtain a processed second packet; and
sending the processed second packet to the first tenant end system; where
when the second packet is a packet without tunnel encapsulation, the processing the second packet includes: deleting the label carried in the second packet; and
when the second packet is a packet with tunnel encapsulation, the processing the second packet includes: decapsulating the second packet and deleting the label carried in the second packet, where the label is carried in an inner packet header or an outer packet header of the second packet with tunnel encapsulation.

A second aspect of the present invention provides another packet forwarding method, including:
receiving a first packet to which a label is added and that is sent by a local management function, where the label is used to indicate a virtual overlay network to which the first tenant end system belongs, the first packet to which the label is added is a packet that is sent by the first tenant end system to a second tenant end system, and the first tenant end system and the second tenant end system are corresponding to different network virtualization edges;
acquiring, according to the label, a virtual overlay network identifier corresponding to the first tenant end system; and
performing tunnel encapsulation on the first packet, and sending the first packet that is after the tunnel encapsulation to a network virtualization edge corresponding to the second tenant end system, where the first packet that is after the tunnel encapsulation carries the virtual overlay network identifier.

In a first implementation manner of the second aspect of the present invention, when the first packet to which the label is added is a packet that is after tunnel encapsulation, before the acquiring, according to the label, an overlay network identifier corresponding to the first tenant end system, the method further includes: decapsulating the first packet that is after the tunnel encapsulation to acquire the label.

With reference to the second aspect or the first implementation manner of the second aspect, in a second implementation manner of the second aspect, the acquiring, according to the label, a virtual overlay network identifier corresponding to the first tenant end system includes: determining that the label is the virtual overlay network identifier; or searching a label mapping table according to the label to acquire a virtual overlay network identifier corresponding to the label, where the label mapping table includes a correspondence between a label and a virtual overlay network identifier.

According to the second implementation manner of the second aspect, in a third implementation manner of the second aspect, when it is determined that the label is the virtual overlay network identifier, performing tunnel encapsulation on the first packet directly according to the virtual overlay network identifier; or
when the label is information that can be mapped to the virtual overlay network identifier, acquiring the virtual overlay network identifier according to the label mapping table, deleting the label from the first packet, and performing tunnel encapsulation on the first packet according to the virtual overlay network identifier.

With reference to each foregoing implementation manner of the second aspect, the method further includes:
receiving a second packet with tunnel encapsulation sent by the network virtualization edge corresponding to the second tenant end system, where the second packet is a packet sent by the second tenant end system to the first tenant end system;
decapsulating the second packet with tunnel encapsulation to obtain the virtual overlay network identifier and a second packet that is after decapsulation; and
processing, according to the virtual overlay network identifier, the second packet that is after the decapsulation, and sending the processed second packet to the local management function corresponding to the first tenant end system; where
the processing the second packet according to the virtual overlay network identifier includes:
   when an encapsulation type in a forwarding table indicates that the second packet that is after the decapsulation needs to be encapsulated again, performing, according to the forwarding table, tunnel encapsulation on the second packet that is after the decapsulation, and adding the virtual overlay network identifier to a second packet that is after the tunnel encapsulation; or
   when an encapsulation type in the forwarding table indicates that the second packet that is after the decapsulation does not need to be encapsulated again, searching the label mapping table to acquire a label corresponding to the virtual overlay network identifier, adding the label to the second packet, and forwarding, according to the forwarding table, the second packet to which the label is added.

A third aspect of the present invention provides a packet forwarding apparatus, including:
a receiver, configured to receive a first packet sent by a first tenant end system, where a destination address of the first packet is an address of a second tenant end system, and the first tenant end system and the second tenant end system are corresponding to different network virtualization edges;
a processor, configured to add a label to the first packet, where the label is used to indicate a virtual overlay network to which the first tenant end system belongs; and
a transmitter, configured to send the first packet to which the label is added to a network virtualization edge corresponding to the first tenant end system.

According to a first implementation manner of the third aspect of the present invention, the apparatus further includes a memory, and the processor is specifically configured to:
search an identifier mapping table in the memory to acquire a VNID that is corresponding to the first tenant end system and that is in the identifier mapping table, and add the acquired VNID as a label to the first packet, where the identifier mapping table includes a correspondence between a tenant end system identifier TESID and a virtual overlay network identifier VNID.

According to a second implementation manner of the third aspect of the present invention, the apparatus further includes a memory, and the processor is specifically configured to:
search a label mapping table in the memory, acquire, according to the label mapping table, a label corresponding to the first tenant end system, and add the label to the first packet, where the label mapping table includes a correspondence between the tenant end system identifier TESID and a label.

According to the first or second implementation manner of the third aspect of the present invention, in a third implementation manner of the third aspect of the present invention, when the label is directly added to a packet header of the first packet, the transmitter is specifically configured to:
send, according to layer-2 forwarding without tunneling, the first packet to which the label is added to the network virtualization edge corresponding to the first tenant end system.

According to the first or second implementation manner of the third aspect of the present invention, in a fourth implementation manner of the third aspect of the present invention, when the label is added to a first packet that is after tunnel encapsulation, the transmitter is specifically configured to:
send, according to a tunnel based forwarding manner, the first packet to which the label is added to the network virtualization edge corresponding to the first tenant end system.

According to each foregoing implementation manner of the third aspect of the present invention, the receiver is further configured to receive a second packet sent by the network virtualization edge, where the second packet carries the label; a source address of the second packet is the second tenant end system, and a destination address of the second packet is the first tenant end system;
the processor is further configured to process the second packet to obtain a processed second packet; and
the transmitter is further configured to send the processed second packet to the first tenant end system; where
when the second packet is a packet without tunnel encapsulation, the processor is further configured to delete the label carried in the second packet; and
when the second packet is a packet with tunnel encapsulation, the processor is further configured to decapsulate the second packet and delete the label carried in the second packet, where the label is carried in an inner packet header or an outer packet header of the second packet with tunnel encapsulation.

A fourth aspect of the present invention provides another packet forwarding apparatus, including:
a receiver, configured to receive a first packet to which a label is added and that is sent by a local management function, where the label is used to indicate a virtual overlay network to which the first tenant end system belongs, the first packet to which the label is added is a packet that is sent by the first tenant end system to a second tenant end system, and the first tenant end system and the second tenant end system are corresponding to different network virtualization edges;
a processor, configured to acquire, according to the label, a virtual overlay network identifier corresponding to the first tenant end system, and perform tunnel encapsulation on the first packet, where the first packet that is after the tunnel encapsulation carries the virtual overlay network identifier; and
a transmitter, configured to send the first packet that is after the tunnel encapsulation to a network virtualization edge corresponding to the second tenant end system.

According to a first implementation manner of the fourth aspect, the processor is further configured to decapsulate the first packet that is after the tunnel encapsulation to acquire the label.

According to the fourth aspect or the first implementation manner of the fourth aspect, in a second implementation manner of the fourth aspect, the apparatus further includes a memory, and the processor is specifically configured to:
determine that the label is the virtual overlay network identifier; or
search a label mapping table in the memory according to the label to acquire a virtual overlay network identifier corresponding to the label, where the label mapping table includes a correspondence between a label and a virtual overlay network identifier.

According to the second implementation manner of the fourth aspect, in a third implementation manner of the fourth aspect:
when it is determined that the label is the virtual overlay network identifier, the processor is specifically configured to perform tunnel encapsulation on the first packet directly according to the virtual overlay network identifier; or
when the label is information that can be mapped to the virtual overlay network identifier, the processor is specifically configured to acquire the virtual overlay network identifier according to the label mapping table, delete the label from the first packet, and perform tunnel encapsulation on the first packet according to the virtual overlay network identifier.

Based on each foregoing implementation manner of the fourth aspect of the present invention:
the receiver is further configured to receive a second packet with tunnel encapsulation sent by the network virtualization edge corresponding to the second tenant end system, where the second packet is a packet sent by the second tenant end system to the first tenant end system;
the processor is further configured to decapsulate the second packet with tunnel encapsulation to obtain the virtual overlay network identifier and a second packet that is after decapsulation, and process the second packet that is after the decapsulation; and
the transmitter is further configured to send the processed second packet to the local management function corresponding to the first tenant end system; where
when processing the second packet that is after the decapsulation, the processor is specifically configured to:
   perform tunnel encapsulation on the second packet that is after the decapsulation, and add the virtual overlay network identifier to the second packet with tunnel encapsulation; or
   search the label mapping table to acquire a label corresponding to the virtual overlay network identifier, add the label to the second packet, and perform tunnel encapsulation on the second packet to which the label is added.

A fifth aspect of the present invention provides a data center network, including at least two tenant end systems, at least two local management function, and at least two network virtualization edges, where each of the local management functions is the apparatus in the foregoing third aspect, and each of the network virtualization edges is the apparatus in the foregoing fourth aspect.

According to the present invention, a network virtualization edge is separated from a local management function, and the network virtualization edge is further separated from a server, which reduces load of the server, and improves performance of a data center network. In addition, in the embodiments of the present invention, the local management function adds, to a packet, a label used to indicate a virtual overlay network to which a tenant end system belongs, so that it is convenient for the network virtualization edge to acquire a corresponding virtual overlay network identifier, which also reduces load of the network virtualization edge, and further improves the performance of the data center network.

### BRIEF DESCRIPTION OF DRAWINGS

To describe the technical solutions in the embodiments of the present invention more clearly, the following briefly introduces the accompanying drawings required for the embodiments. Apparently, the accompanying drawings in the following description show merely some embodiments of the present invention, and a person skilled in the art may still derive other drawings from these accompanying drawings without creative efforts.
FIG. 1 is a schematic structural diagram of a data center network based on a layer-3 virtual overlay network in the prior art;
FIG. 2 is a schematic structural diagram of a data center network according to an embodiment of the present invention;
FIG. 3 is a schematic flowchart of a packet forwarding method according to an embodiment of the present invention;
FIG. 4 is a schematic flowchart of another packet forwarding method according to an embodiment of the present invention;
FIG. 5 is a schematic flowchart of another packet forwarding method according to an embodiment of the present invention;
FIG. 6 is a schematic flowchart of another packet forwarding method according to an embodiment of the present invention;
FIG. 7 is a schematic structural diagram of a packet forwarding apparatus according to an embodiment of the present invention; and
FIG. 8 is a schematic structural diagram of another packet forwarding apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

As shown in FIG. 2, FIG. 2 is a schematic structural diagram of a data center network according to an embodiment of the present invention. The data center network includes a tenant end system TES 1 of a tenant, a local management function 2, and a network virtualization edge NVE 3.

The tenant end systems 1a to 1f may include a virtual machine, a server, or another network device. The local management functions 2a to 2c may be system management program hypervisors on a server that supports virtualization. The tenant end system and the local management function that manages the tenant end system may be located on a same physical device or located on different physical devices. The local management function and an NVE corresponding to the local management function may be located on a same physical device or located on different physical devices. In a virtualization scenario, a local management function and all tenant end systems that are locally connected to the local management function may be located on a same server that supports virtualization. The network virtualization edges 3a to 3c are devices separated from a server. Optionally, in an implementation manner, the network virtualization edges 3a to 3c are top-of-rack switches (Top of Rack, ToR). The tenant end systems 1a to 1e may belong to one or multiple tenants. In this embodiment, it is assumed that the TES 1a, the TES Id, and the TES 1e belong to a first tenant, the TES 1b and the TES If belong to a second tenant, and the TES 1c belongs to a third tenant. A virtual overlay network identifier allocated by a system to the first tenant is VN1, a virtual overlay network identifier allocated by the system to the second tenant is VN2, and a virtual overlay network identifier allocated by the system to the third tenant is VN3.

An identifier mapping table of a locally managed tenant end system versus a virtual overlay network to which the locally managed tenant end system belongs is optionally stored on each local management function 2. The identifier mapping table includes a correspondence between a tenant end system identifier TESID and a virtual overlay network identifier VNID. The foregoing TESID may be a MAC address, an IP address, a virtual interface that are of a TES, or other information that may identify the TES. In the embodiment, TES 1a to TES1f are each used as a tenant end system identifier.

The data center network in FIG. 2 is used as an example, where an identifier mapping table stored on the local management function 2a includes two entries (TES1a, VN1) and (TES1b, VN2), an identifier mapping table stored on the local management function 2b includes one entry (TES1c, VN1), and an identifier mapping table stored on the local management function 2c includes three entries (TES1d, VN1), (TES1e, VN2), and (TESIf, VN2).

In another embodiment, a first label mapping table is further stored on each local management function 2, where the first label mapping table includes a correspondence between the tenant end system identifier TESID and a label. Optionally, a first forwarding table is further stored on each local management function 2, where the first forwarding table includes a correspondence among a destination tenant end system identifier TESID, an egress NVE address, and a port. When a tenant end system is a tenant end system within a management scope of the local management function, an egress NVE address in a corresponding entry is empty. The local management function 2a is used as an example, and it is assumed that IP addresses of the NVE 3a to the NVE 3c are IP 1 to IP 3, respectively, and the local management function 2a is connected to the TES1a by using a port 1, is connected to the TES 2a by using a port 2, and is connected to the NVE 3a by using a port 3, in this case the first forwarding table stored on the local management function 2 is shown in Table 1. When a network side port of the local management function 2 does not send a packet with tunnel encapsulation, an egress NVE address column in the first forwarding table has no practical significance and may be empty. As shown in Table 1, an egress NVE address is not empty in a case that the network side port of the local management function 2 needs to send a packet with tunnel encapsulation. The following Table 1 has no entry related to the TES1c because the TES1c belongs to the third tenant, but multiple TESs locally managed by the local management function 2a belong only to the first tenant and the second tenant, and do not need to communicate with the TES1c, and therefore, the local management function 2a does not need to learn a MAC address of the TES1c.

| **Destination TES** | **Egress NVE Address** | **Port Number** |
|---|---|---|
| TES 1a | | 1 |
| TES 1b | | 2 |
| TES 1d | IP 1 | 3 |
| TES 1e | IP 1 | 3 |
| TES 1f | IP 1 | 3 |

Optionally, a default entry may be further set in the first forwarding table on each local management function 2. If the network side port of the local management function 2 needs to send a packet with tunnel encapsulation, a default egress NVE address may be set. Then, all TESs that are not connected to a user side port of the local management function 2 are corresponding to the default egress NVE address, and the packet with tunnel encapsulation is sent according to the default entry. The egress NVE address in the default entry is an address of the NVE connected to the local management function 2, and a port number in the default entry is a port, of the local management function 2, connected to the NVE.

A second forwarding table is stored on each NVE 3. The second forwarding table includes at least a correspondence among a destination tenant end system address, a tunnel destination address, and a port number. The tenant end system address includes at least one of a MAC address and an IP address. Entries of the second forwarding table may further include other information required for forwarding a packet, such as an encapsulation type. When a tunnel destination address in an entry is empty, tunnel encapsulation does not need to be performed on a packet matching the entry, and the packet is sent directly by using a port in the entry. The tunnel is a tunnel that connects a network virtualization edge and a local management function or connects a network virtualization edge and another network virtualization edge. The tunnel destination address refers to an address of a local management function or a network virtualization edge that serves as a tunnel remote end.

The data center network in FIG. 2 is used as an example, and it is assumed that MAC addresses of the TES 1a to the TES If are MAC 1a to MAC 1f, respectively, IP addresses of the NVE 3a to the NVE 3c are IP 1 to IP 3, respectively, IP addresses of the local management functions 2a to 2c are IP a to IP c, respectively, and the NVE 3a is connected to the local management function 2a by using a port 1 and is connected to the NVE 3c by using a port 2, so that a second forwarding table stored on the NVE 3a is shown in Table 2 (where an example that a TES address is a MAC address is used).

**Table 2**

| **Destination TES Address** | **Tunnel Destination Address** | **Port Number** |
|---|---|---|
| MAC 1a | IP a | 1 |
| MAC 1b | IP a | 1 |
| MAC 1d | IP 3 | 2 |
| MAC 1e | IP 3 | 2 |
| MAC 1f | IP 3 | 2 |

The foregoing Table 1 has no entry related to the TES 1c because the TES 1c belongs to the third tenant, but multiple TESs locally managed by the NVE 3a belong only to the first tenant and the second tenant, and do not need to communicate with the TES 1c, and therefore, the NVE 3a does not need to learn a MAC address of the TES 1c.

In another implementation manner, in the foregoing second forwarding table, tunnel destination addresses in entries in which destination addresses are MAC 1a and MAC 1b may also be empty. In this case, tunnel encapsulation does not need to be performed on a packet that is to be sent to a destination address. Further, after a label is added to the packet that is to be sent to the destination address, layer-2 forwarding without tunneling is performed.

Optionally, each network virtualization edge NVE 3 further stores a second label mapping table, where the second label mapping table includes a correspondence between a label and a virtual overlay network identifier VNID. For details about use of the second label mapping table, reference may be made to descriptions in subsequent related embodiments. In the foregoing data center network, the local management function 2 and the NVE 3 work with each other, so that a packet sent by a TES can be forwarded to another TES that belongs to a same tenant as the TES and that belongs to a different NVE 3.

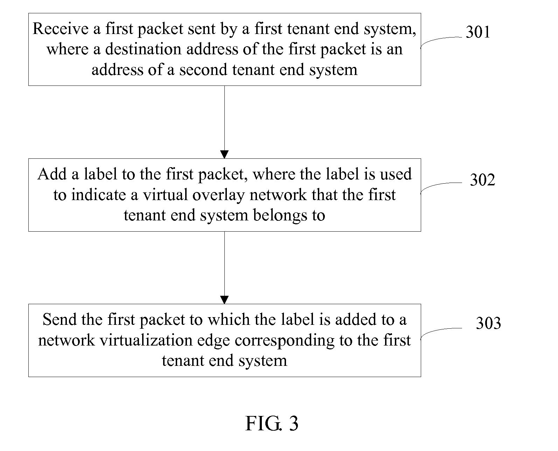

Specifically, an embodiment of the present invention provides a packet forwarding method, where the method is executed by a first local management function, and as shown in FIG. 3, the method includes:
301: Receive a first packet sent by a first tenant end system, where a destination address of the first packet is an address of a second tenant end system, and the first tenant end system and the second tenant end system are corresponding to different network virtualization edges.

The foregoing first tenant end system and second tenant end system belong to a same tenant. For example, a local management function 2a in FIG. 2 receives a first packet sent by a TES 1a to a TES 1d, where a source address of the first packet is at least one of a MAC address or an IP address of the TES 1a, and correspondingly, a destination address of the first packet is at least one of a MAC address or an IP address of the TES Id. In subsequent processing of the present invention, various processing is performed on the first packet according to a need. For example, a label or a virtual overlay network identifier is added, or encapsulation, decapsulation, or the like is performed on the first packet. The various processing is performed all in a packet header and has no impact on a payload part of the packet, and a source address and a destination address that are in an inner layer of the packet do not change, and therefore, no matter what type of processing is performed on the packet, an obtained packet is still called a first packet.

302: Add a label to the first packet, where the label is used to indicate a virtual overlay network to which the first tenant end system belongs.

The label is used to indicate the overlay network to which the first tenant end system belongs. Specifically, the label may be any information that can be mapped to a virtual overlay network identifier, or a virtual overlay network identifier.

In an implementation manner, when receiving the first packet, the local management function 2 searches a first label mapping table, acquire, according to the first label mapping table, a label corresponding to the first tenant end system, and adds the label to the first packet.

In another implementation manner, the local management function 2 searches an identifier mapping table, acquires a VNID that is corresponding to the first tenant end system and that is in the identifier mapping table, and adds the acquired VNID as a label to the first packet.

In the foregoing implementation, when tunnel encapsulation does not need to be performed on the first packet, the acquired label may be directly added in a specific field of a packet header of the first packet; or when tunnel encapsulation needs to be performed on the first packet, the acquired label may be added to a specific field of an outer packet header or an inner packet header of a packet that is obtained after the tunnel encapsulation is performed on the first packet.

The label may be added to a specific type of field of the packet header of the first packet, such as an I-SID field, a VLAN field, or a C-VLAN plus an S-VLAN, or may be added to a newly added label field. A length of the label may be 24 bits or 12 bits. When the label is 24 bits or the length of the label is the same as a length of the VNID, the label may be an identifier VNID of the virtual overlay network to which the first tenant end belongs. When the label is 12 bits or shorter than a length of the VNID, the label may be a VLAN identifier of a local VLAN that is of a tenant and to which the first tenant end system belongs. The local VLAN refers to a VLAN whose VLAN ID can uniquely identify, within a scope managed by a network virtualization edge, an overlay network.

For example, in an implementation manner, the local management function 2a searches an identifier mapping table stored on the local management function 2a, finds that a virtual overlay network identifier corresponding to the TES 1a is VN1, and adds VN1 as a label to the packet header of the first packet. Alternatively, the local management function 2a adds a local virtual local area network identifier VLAN ID, to which the TES 1a belongs, as a label to the packet header of the first packet according to a label mapping table. Specifically, what type of information is added as a label and which fields the information is added to may be negotiated in advance by the local management function 2 and a network virtualization edge 3 connected to the local management function 2. The local management function 2 may autonomously set a time and a manner for adding the label to the first packet.

303: Send the first packet to which the label is added to a network virtualization edge corresponding to the first tenant end system.

Optionally, the local management function 2 may send, according to layer-2 forwarding without tunneling, the first packet to which the label is added to the network virtualization edge connected to the local management function 2. For the layer-2 forwarding without tunneling, an outer address does not need to be encapsulated for the first packet.

In another implementation manner, the local management function 2 performs tunnel encapsulation on the first packet according to a stored first forwarding table or a set default entry, adds the label to the inner packet header or the outer packet header of a first packet that is after the tunnel encapsulation, and sends the first packet that is after the tunnel encapsulation to the network virtualization edge in a tunnel based forwarding manner. An outer source address of the first packet that is after the tunnel encapsulation is an address of the local management function 2, and an outer destination address of the first packet that is after the tunnel encapsulation is an egress NVE address. For example, an inner source address of the first packet that is after the tunnel encapsulation is an address of the TES 1a, an inner destination address of the first packet that is after the tunnel encapsulation is an address of the TES Id, the outer source address of the first packet that is after the tunnel encapsulation is an address of the local management function 2a, and the outer destination address of the first packet that is after the tunnel encapsulation is an address of an NVE 3a. In another implementation manner, the label may also be added to the inner packet header of the first packet.

The tunnel encapsulation mentioned in this application refers to encapsulating the outer packet header for the first packet, a source address and a destination address that are in the outer packet header are a local management function and a network virtualization edge respectively, or both the source address and the destination address are network virtualization edges. There are multiple choices for a virtual overlay network encapsulation type, such as VXLAN encapsulation, NVGRE encapsulation, or MPLS encapsulation in a VPN manner.

According to the method shown in FIG. 3, a local management function connected to a first tenant end system sends, to a network virtualization edge corresponding to the first tenant end system, a first packet sent by the first tenant end system.

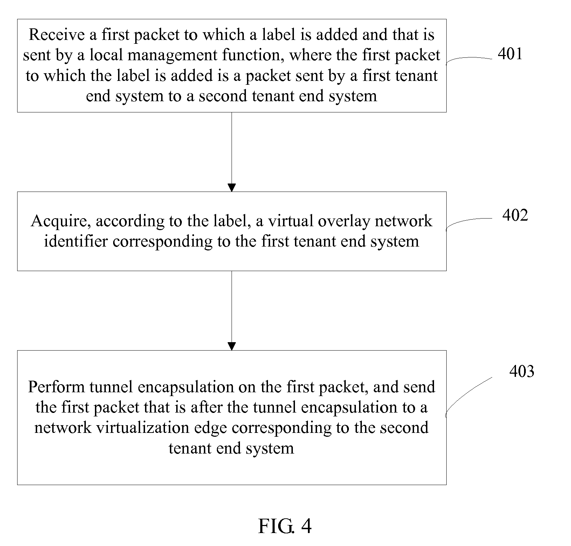

Referring to FIG. 4, an embodiment of the present invention further provides a packet forwarding method, which is used for processing that is after a first network virtualization edge 3 receives a first packet sent by a first local management function. As shown in FIG. 4, the method includes:
401: Receive a first packet to which a label is added and that is sent by a local management function, where the first packet to which the label is added is a packet sent by a first tenant end system to a second tenant end system, and the first tenant end system and the second tenant end system are corresponding to different network virtualization edges.

The first packet may be a first packet to which only a label is added and that is in step 303, may be a first packet that undergoes tunnel encapsulation after a label is added to an inner packet header of the first packet, or may be a first packet with an outer packet header to which the label is added.

402: Acquire, according to the label, a virtual overlay network identifier corresponding to the first tenant end system.

When the network virtualization edge determines that a destination address of the first packet to which the label is added is not an address of the network virtualization edge, the network virtualization edge executes the step of acquiring, according to the label, a virtual overlay network identifier corresponding to the first tenant end system.

When the first packet to which the label is added is a packet with tunnel encapsulation, before the overlay network identifier corresponding to the first tenant end system is acquired according to the label, the method further includes: decapsulating the tunneled first packet to acquire the label.

The decapsulation is specifically deleting an outer packet header of the tunneled first packet to which the label is added.

The acquiring, according to the label, a virtual overlay network identifier corresponding to the first tenant end system includes: determining that the label is the virtual overlay network identifier; or searching a second label mapping table according to the label to acquire a virtual overlay network identifier corresponding to the label.

403: Perform tunnel encapsulation on the first packet, and send the first packet that is after the tunnel encapsulation to a network virtualization edge corresponding to the second tenant end system, where the first packet that is after the tunnel encapsulation carries the virtual overlay network identifier.

An outer source address of the tunneled first packet is the address of the network virtualization edge corresponding to the first tenant end system, and an outer destination address of the tunneled first packet is an address of the network virtualization edge corresponding to the second tenant end system.

Optionally, when the label is the virtual overlay network identifier, the tunnel encapsulation may be performed on the first packet directly according to the virtual overlay network identifier without requiring the label to be processed.

In another implementation manner, when the label is other information that can be mapped to the virtual overlay network identifier, the network virtualization edge acquires the label, acquires the virtual overlay network identifier from the second label mapping table according to the label, deletes the label from the first packet, and performs the tunnel encapsulation on the first packet according to the virtual overlay network identifier. When the encapsulation is performed on the first packet, the virtual overlay network identifier is encapsulated into the inner packet header or the outer packet header of the first packet.

When the tunnel encapsulation is performed on the first packet, a second forwarding table is searched according to a destination address of the first packet, that is, an address of the second tenant end system, so as to find the address of the network virtualization edge corresponding to the second tenant end system. Then, the tunnel encapsulation is performed on the first packet by using the address of the network virtualization edge corresponding to the first tenant end system as a source address and by using the network virtualization edge corresponding to the second tenant end system as a destination address.

For example, an NVE 3a searches the second forwarding table according to an address of a TES Id, and finds that an address corresponding to an NVE 3c corresponding to the TES Id is IP 3, and then the NVE 3a performs encapsulation on the first packet by using its own address IP 1 as an outer source address and by using IP 3 as an outer destination address.

The virtual overlay network identifier may be carried in the outer packet header or the inner packet header of the first packet that is after the tunnel encapsulation.

According to the method shown in FIG. 4, a network virtualization edge corresponding to a first tenant end system sends, to a network virtualization edge corresponding to a second end system, a first packet carrying a virtual overlay network identifier.

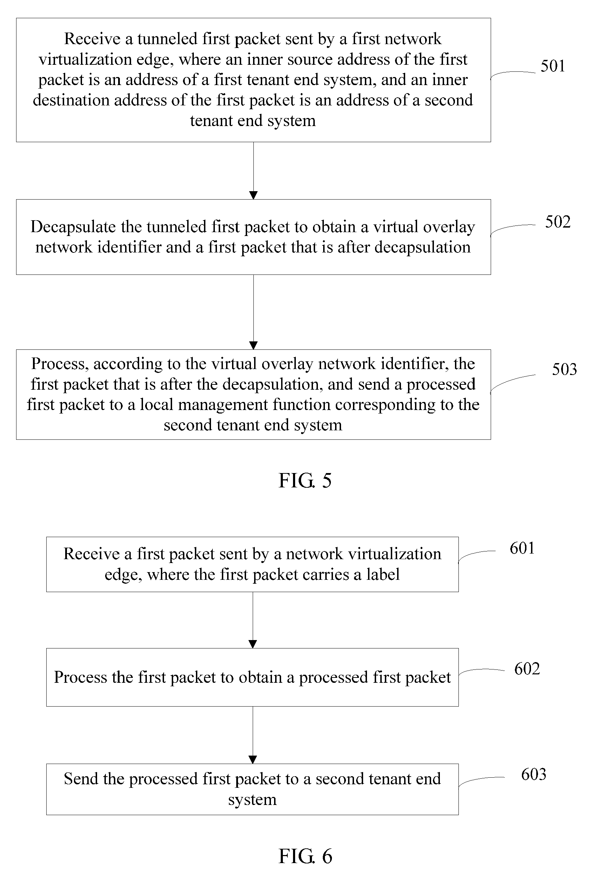

As shown in FIG. 5, an embodiment of the present invention provides another packet forwarding method, which is used for processing that is after a second network virtualization edge receives a packet sent by a first network virtualization edge. As shown in FIG. 5, the method includes:
501: Receive a tunneled first packet sent by a first network virtualization edge, where an inner source address of the first packet is an address of a first tenant end system, an inner destination address of the first packet is an address of a second tenant end system, and the first tenant end system and the second tenant end system are corresponding to different network virtualization edges. The tunneled first packet carries a virtual overlay network identifier corresponding to the first tenant end system.

For example, an NVE 3c receives a first packet sent by an NVE 3a according to step 403, where an inner source address of the first packet is an address of a TES1a, and an inner destination address of the first packet is an address of a TES Id.

502: Decapsulate the tunneled first packet to obtain the virtual overlay network identifier and a first packet that is after decapsulation.

The first packet that is after the decapsulation is an original packet that is sent by the first tenant end system and that is in step 301.

For example, the NVE 3c decapsulates a packet sent by the NVE 3a, where a source address of an obtained packet is the address of the TES 1a, and a destination address of the obtained packet is the address of the TES Id. In this case, when the virtual overlay network identifier is carried in an inner packet header of the tunneled first packet:
503: Process, according to the virtual overlay network identifier, the first packet that is after the decapsulation, and send a processed first packet to a local management function corresponding to the second tenant end system.

The processing, according to the virtual overlay network identifier, the first packet optionally includes:
when an encapsulation type in the second forwarding table indicates that the first packet needs to be encapsulated again, performing, by the second network virtualization edge according to the second forwarding table, tunnel encapsulation on the first packet, and adding the virtual overlay network identifier to a first packet that is after the tunnel encapsulation; or
when an encapsulation type in the second forwarding table indicates that the first packet does not need to be encapsulated again, searching, by the second network virtualization edge, a second label mapping table to acquire a label corresponding to the virtual overlay network identifier, adding the label to the first packet, and forwarding, according to the second forwarding table, the first packet to which the label is added.

There may be multiple manners for determining the foregoing encapsulation type, for example, the encapsulation type may be set by static configuration, or obtained according to an encapsulation type of the second forwarding table, or obtained according to a value of a tunnel destination address of the second forwarding table.

After the foregoing tunnel encapsulation, an outer source address of the first packet is an address of the second network virtualization edge, an outer destination address of the first packet is a local management function corresponding to the second tenant end system, the inner source address of the first packet is the address of the first tenant end system, and the inner destination address of the first packet is the address of the second tenant end system.

According to the method shown in FIG. 5, a network virtualization edge corresponding to a second tenant end system sends a processed first packet to a local management function corresponding to a second end system.

As shown in FIG. 6, an embodiment of the present invention provides another packet forwarding method, which is used for processing that is after a second local management function corresponding to a second end system receives a first packet sent by a second network virtualization edge. As shown in FIG. 6, the method includes:
601: Receive a first packet sent by a network virtualization edge, where the first packet carries a label.

For example, a local management function 2c receives a first packet sent by an NVE3c according to step 503. For the label, reference may be made to step 302, and the label may be a virtual overlay network identifier or information that can indicate a virtual overlay network to which the first tenant end system belongs.

602: Process the first packet to obtain a processed first packet.

The processed first packet is an original packet that is sent by the first tenant end system and that is in step 301.

When the first packet is a packet without tunnel encapsulation, the processing may be deleting the label carried in a packet header of the first packet. When the first packet is a packet with tunnel encapsulation, the processing is decapsulating the first packet and deleting the label carried in the first packet. The label is carried in an inner packet header or an outer packet header of the tunneled first packet. When the label is carried in the outer packet header, the label carried in the first packet may be deleted by deleting the outer packet header of the first packet.

For example, the local management function 2c decapsulates the packet, and deletes the outer packet header of the packet, where a source address of a packet that is after decapsulation is an address of a TES 1a, and a destination address of the packet that is after the decapsulation is an address of a TES 1d.

603: Send the processed first packet to the second tenant end system. The first packet whose label is deleted is a first packet received by the first local management function in step 301. The sending the processed first packet to the second tenant end system may be specifically: sending the processed first packet to the second tenant end system according to a first forwarding table.

The sending the processed first packet the second tenant end system is specifically: sending, by the second local management function, the processed first packet to the second tenant end system according to the first forwarding table.

According to the foregoing method shown in FIG. 3 to FIG. 6, a packet sent by a first tenant end system finally arrives at a second end system.

The foregoing division of FIG. 3 to FIG. 6 is merely for ease of description. In actual implementation, because communication is bidirectional, a local management function may simultaneously execute the method shown in FIG. 3 and FIG. 6 in different directions, and a network virtualization edge may also simultaneously execute the method shown in FIG. 4 and FIG. 5 in different directions. That is, in FIG. 6, after the first tenant end system and the second tenant end system are exchanged, and the first packet is changed into the second packet, the method in FIG. 6 may be implemented by the local management function 2a. In FIG. 5, the second tenant end system and the first tenant end system are exchanged, the first network virtualization edge is changed into the second network virtualization edge, and the first packet is changed into the second packet, and then the method in FIG. 5 may be implemented by the network virtualization edge 3a.

In addition, according to a need in actual execution, any combination of all the steps in FIG. 3 and FIG. 6 may be implemented by a local management function in the present invention, and any combination of all the steps in FIG. 4 and FIG. 5 may be implemented by a network virtualization edge in the present invention.

According to the foregoing method in the embodiment of the present invention, a network virtualization edge is separated from a local management function, and the network virtualization edge is further separated from a server, which reduces load of the server, and improves performance of a data center network. In addition, in the embodiment of the present invention, the local management function adds, to a packet, a label used to indicate a virtual overlay network to which a tenant end system belongs, so that it is convenient for the network virtualization edge to acquire a corresponding virtual overlay network identifier, which also reduces load of the network virtualization edge, and further improves the performance of the data center network.

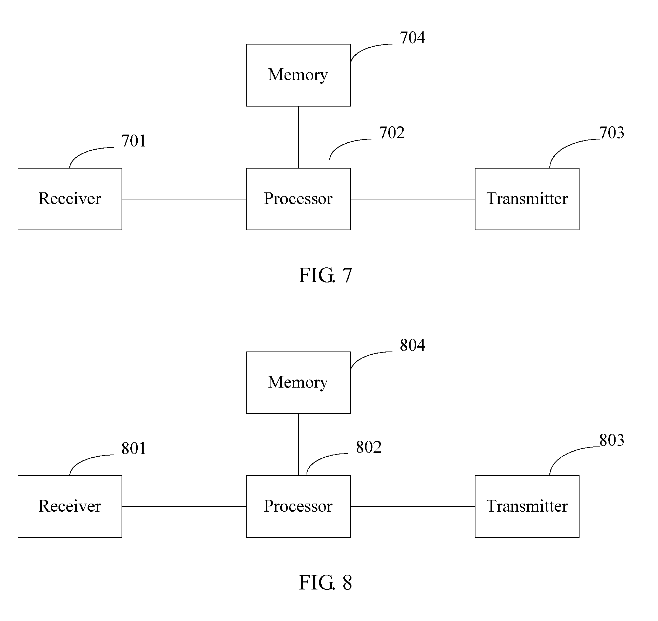

As shown in FIG. 7, an embodiment of the present invention further provides a packet forwarding apparatus, which is configured to implement the foregoing method and a local management function of a data center network, where the local management function may be located on a server. The apparatus includes: a receiver 701, a processor 702, and a transmitter 703.

The receiver 701 is configured to receive a first packet sent by a first tenant end system, where a destination address of the first packet is an address of a second tenant end system, and the first tenant end system and the second tenant end system are corresponding to different network virtualization edges.

The receiver 701 is specifically configured to execute step 301 in FIG. 3.

The processor 702 is configured to add a label to the first packet, where the label is used to indicate a virtual overlay network to which the first tenant end system belongs. The processor 702 is specifically configured to execute step 302 in FIG. 3.

The packet forwarding apparatus may further include a memory 704. When executing step 302 in FIG. 3, the processor 702 is specifically configured to:
search a first label mapping table in the memory, acquire, according to the first label mapping table, a label corresponding to the first tenant end system, and add the label to the first packet; or
search an identifier mapping table in the memory, acquire a VNID that is corresponding to the first tenant end system and that is in the identifier mapping table, and add the acquired VNID as a label to the first packet.

The acquired label may be added to a specific field of a packet header of the first packet, or may be added to a specific field of an outer packet header of a packet that is obtained after tunnel encapsulation is performed on the first packet.

The transmitter 703 is configured to send the first packet to which the label is added to a network virtualization edge corresponding to the first tenant end system. The transmitter 703 is specifically configured to execute step 303 in FIG. 3.

The transmitter 703 is specifically configured to:
send, according to layer-2 forwarding without tunneling, the first packet to which the label is added to the network virtualization edge corresponding to the first tenant end system; or
perform tunnel encapsulation on the first packet, add the label to an inner packet header or an outer packet header of a first packet that is after the tunnel encapsulation, and send the first packet that is after the tunnel encapsulation to the network virtualization edge corresponding to the first tenant end system in a tunnel based forwarding manner.

When a second packet sent by a second tenant end system arrives at the packet forwarding apparatus by using the network virtualization edge:
the receiver 701 is further configured to receive the second packet sent by the network virtualization edge, where the second packet carries the label. A source address of the second packet is the second tenant end system, and a destination address of the second packet is the first tenant end system. In this case, the receiver 701 is specifically configured to execute step 601 in FIG. 6.

The processor 702 is further configured to process the second packet to obtain a processed second packet, where a source address of the processed second packet is the address of the second tenant end system, and a destination address of the processed second packet is an address of the first tenant end system. Referring to step 602, when the second packet is a packet without tunnel encapsulation, the processor is further configured to delete the label carried in a packet header of the second packet; and when the second packet is a packet with tunnel encapsulation, the processor is further configured to decapsulate the second packet and delete the label carried in the second packet, where the label is carried in an inner packet header or an outer packet header of the second packet with tunnel encapsulation.

The transmitter 703 is further configured to send the processed second packet to the first tenant end system according to a first forwarding table in the memory. The first forwarding table includes a correspondence among a destination tenant end system identifier TESID, an egress NVE address, and a port. In conclusion, the packet forwarding apparatus in FIG. 7 is configured to implement the methods in FIG. 3 and FIG. 6, and for content that is not described in detail in this part, reference may be made to descriptions of FIG. 3 and FIG. 6.

As shown in FIG. 8, an embodiment of the present invention further provides a packet forwarding apparatus, which is configured to implement the foregoing method and a network virtualization edge of a data center network. The apparatus includes: a receiver 801, a processor 802, and a transmitter 803.

The receiver 801 is configured to receive a first packet to which a label is added and that is sent by a local management function, where the label is used to indicate a virtual overlay network to which the first tenant end system belongs, the first packet to which the label is added is a packet that is sent by the first tenant end system to a second tenant end system, and the first tenant end system and the second tenant end system are corresponding to different network virtualization edges. The receiver 801 is specifically configured to execute step S401.

The processor 802 is configured to acquire, according to the label, a virtual overlay network identifier corresponding to the first tenant end system.

When the first packet to which the label is added is a packet with tunnel encapsulation, the processor 802 is further configured to decapsulate the tunneled first packet to acquire the label.

The packet forwarding apparatus further includes a memory 804. The processor 802 is specifically configured to determine that the label is the virtual overlay network identifier, or search a second label mapping table in the memory 804 according to the label to acquire a virtual overlay network identifier corresponding to the label. The processor 802 is specifically configured to execute step 402.

The processor 802 is further configured to perform tunnel encapsulation on the first packet, where the first packet that is after the tunnel encapsulation carries the virtual overlay network identifier.

Specifically, when the label is the virtual overlay network identifier, the label does not need to be processed, and the processor 802 performs the tunnel encapsulation on the first packet directly according to the virtual overlay network identifier.

When the label is other information that can be mapped to the virtual overlay network identifier, the processor 802 acquires the label, acquires the virtual overlay network identifier from the second label mapping table in the memory 804 according to the label, deletes the label from the first packet, and performs the tunnel encapsulation on the first packet. When the encapsulation is performed on the first packet, the virtual overlay network identifier is encapsulated into an inner packet header or an outer packet header of the first packet.

The transmitter 803 is configured to send the first packet that is after the tunnel encapsulation to a network virtualization edge corresponding to the second tenant end system.

When a second packet sent by the second tenant end system arrives at the packet forwarding apparatus:
the receiver 801 is further configured to receive a second packet with tunnel encapsulation sent by the network virtualization edge corresponding to the second tenant end system, where the second packet is a packet sent by the second tenant end system to the first tenant end system, and the first tenant end system and the second tenant end system are corresponding to different network virtualization edges;
the processor 802 is further configured to decapsulate the second packet with tunnel encapsulation sent by the first network virtualization edge to obtain a virtual overlay network identifier and a second packet that is after decapsulation; where the second packet that is after the decapsulation is an original packet sent by the second tenant end system;
the processor 802 is further configured to process the second packet that is after the decapsulation; and
the transmitter 803 is further configured to send a processed second packet to the local management function corresponding to the first tenant end system.

When an encapsulation type in a second forwarding table in the memory 804 indicates that the second packet that is after the decapsulation needs to be encapsulated again, the processor is further configured to perform, according to the second forwarding table, tunnel encapsulation on the second packet, and add the virtual overlay network identifier to the second packet with tunnel encapsulation.

When an encapsulation type in a second forwarding table in the memory 804 indicates that the second packet that is after the decapsulation does not need to be encapsulated again, the processor 802 is further configured to search the second label mapping table in the memory 804, acquire a label corresponding to the virtual overlay network identifier, and add the label to the first packet.

The transmitter 803 is further configured to forward, according to the second forwarding table, the second packet to which the label is added.

In conclusion, the packet forwarding apparatus in FIG. 8 is configured to implement the methods in FIG. 4 and FIG. 5, and for content that is not described in detail in this part, reference may be made to descriptions of FIG. 4 and FIG. 5.

According to the foregoing apparatus in the embodiment of the present invention, a network virtualization edge is separated from a local management function, and the network virtualization edge is further separated from a server, which reduces load of the server, and improves performance of a data center network. In addition, in the embodiment of the present invention, the local management function adds, to a packet, a label used to indicate a virtual overlay network to which a tenant end system belongs, so that it is convenient for the network virtualization edge to acquire a corresponding virtual overlay network identifier, which also reduces load of the network virtualization edge, and further improves the performance of the data center network.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

The foregoing descriptions are merely exemplary embodiments of the present invention, but are not intended to limit the present invention. Any modification, equivalent replacement, and improvement made without departing from the spirit and principle of the present invention shall fall within the protection scope of the present invention.

## Claims

1. A packet forwarding method, comprising:
receiving a first packet sent by a first tenant end system, wherein a destination address of the packet is an address of a second tenant end system, and the first tenant end system and the second tenant end system are corresponding to different network virtualization edges;
adding a label to the first packet, wherein the label is used to indicate a virtual overlay network to which the tenant end system belongs; and
sending the first packet to which the label is added to a network virtualization edge corresponding to the first tenant end system.

2. The method according to claim 1, wherein the adding a label to the first packet comprises:
searching an identifier mapping table to acquire a virtual overlay network identifier VNID that is corresponding to the first tenant end system and that is in the identifier mapping table, and adding the acquired VNID as a label to the first packet, wherein the identifier mapping table comprises a correspondence between a tenant end system identifier TESID and a virtual overlay network identifier VNID.

3. The method according to claim 1, wherein the adding a label to the first packet comprises:
searching a label mapping table to acquire a label corresponding to the first tenant end system, and adding the label to the first packet, wherein the label mapping table comprises a correspondence between the tenant end system identifier TESID and a label.

4. The method according to claim 2 or 3, wherein
the adding a label to the first packet comprises: adding the label directly to a packet header of the first packet; and
the sending the first packet to which the label is added to a network virtualization edge corresponding to the first tenant end system comprises: sending, according to layer-2 forwarding without tunneling, the first packet to which the label is added to the network virtualization edge corresponding to the first tenant end system.

5. The method according to claim 2 or 3, wherein
the adding a label to the first packet comprises: performing tunnel encapsulation on the first packet, and adding the label to a first packet that is after the tunnel encapsulation; and
the sending the first packet to which the label is added to a network virtualization edge corresponding to the first tenant end system comprises: sending, according to a tunnel based forwarding manner, the first packet to which the label is added to the network virtualization edge corresponding to the first tenant end system.

6. The method according to any one of claims 1 to 5, wherein the method further comprises:
receiving a second packet sent by the network virtualization edge, wherein the second packet carries the label; a source address of the second packet is the second tenant end system, and a destination address of the second packet is the first tenant end system;
processing the second packet to obtain a processed second packet; and
sending the processed second packet to the first tenant end system.

7. The method according to claim 6, wherein
when the second packet is a packet without tunnel encapsulation, the processing the second packet comprises: deleting the label carried in the second packet; and
when the second packet is a packet with tunnel encapsulation, the processing the second packet comprises: decapsulating the second packet and deleting the label carried in the second packet, wherein the label is carried in an inner packet header or an outer packet header of the second packet with tunnel encapsulation.

8. A packet forwarding method, comprising:
receiving a first packet to which a label is added and that is sent by a local management function, wherein the label is used to indicate a virtual overlay network to which the first tenant end system belongs, the first packet to which the label is added is a packet that is sent by the first tenant end system to a second tenant end system, and the first tenant end system and the second tenant end system are corresponding to different network virtualization edges;
acquiring, according to the label, a virtual overlay network identifier corresponding to the first tenant end system; and
performing tunnel encapsulation on the first packet, and sending a first packet that is after the tunnel encapsulation to a network virtualization edge corresponding to the second tenant end system, wherein the first packet that is after the tunnel encapsulation carries the virtual overlay network identifier.

9. The method according to claim 8, wherein
when the first packet to which the label is added is a packet that is after tunnel encapsulation, before the acquiring, according to the label, an overlay network identifier corresponding to the first tenant end system, the method further comprises: decapsulating the first packet that is after the tunnel encapsulation to acquire the label.

10. The method according to claim 8 or 9, wherein the acquiring, according to the label, a virtual overlay network identifier corresponding to the first tenant end system comprises: determining that the label is the virtual overlay network identifier; or searching a label mapping table according to the label to acquire a virtual overlay network identifier corresponding to the label, wherein the label mapping table comprises a correspondence between a label and a virtual overlay network identifier.

11. The method according to claim 10, comprising: when it is determined that the label is the virtual overlay network identifier, performing tunnel encapsulation on the first packet directly according to the virtual overlay network identifier; or
when the label is information that can be mapped to the virtual overlay network identifier, acquiring the virtual overlay network identifier according to the label mapping table, deleting the label from the first packet, and performing tunnel encapsulation on the first packet according to the virtual overlay network identifier.

12. The method according to any one of claims 8 to 11, wherein the method further comprises:
receiving a second packet with tunnel encapsulation sent by the network virtualization edge corresponding to the second tenant end system, wherein the second packet is a packet sent by the second tenant end system to the first tenant end system;
decapsulating the second packet with tunnel encapsulation to obtain the virtual overlay network identifier and a second packet that is after decapsulation; and
processing, according to the virtual overlay network identifier, the second packet that is after the decapsulation, and sending the processed second packet to the local management function corresponding to the first tenant end system.

13. The method according to claim 12, wherein the processing the second packet according to the virtual overlay network identifier comprises:
when an encapsulation type in a forwarding table indicates that the second packet that is after the decapsulation needs to be encapsulated again, performing, according to the forwarding table, tunnel encapsulation on the second packet that is after the decapsulation, and adding the virtual overlay network identifier to a second packet that is after the tunnel encapsulation again; or
when an encapsulation type in the forwarding table indicates that the second packet that is after the decapsulation does not need to be encapsulated again, searching the label mapping table to acquire a label corresponding to the virtual overlay network identifier, adding the label to the second packet, and forwarding, according to the forwarding table, the second packet to which the label is added.

14. A packet forwarding apparatus, comprising:
a receiver, configured to receive a first packet sent by a first tenant end system, wherein a destination address of the first packet is an address of a second tenant end system, and the first tenant end system and the second tenant end system are corresponding to different network virtualization edges;
a processor, configured to add a label to the first packet, wherein the label is used to indicate a virtual overlay network to which the first tenant end system belongs; and
a transmitter, configured to send the first packet to which the label is added to a network virtualization edge corresponding to the first tenant end system.

15. The apparatus according to claim 14, wherein the apparatus further comprises a memory, and the processor is specifically configured to:
search an identifier mapping table in the memory to acquire a VNID that is corresponding to the first tenant end system and that is in the identifier mapping table, and add the acquired VNID as a label to the first packet, wherein the identifier mapping table comprises a correspondence between a tenant end system identifier TESID and a virtual overlay network identifier VNID.

16. The apparatus according to claim 14, wherein the apparatus further comprises a memory, and the processor is specifically configured to:
search a label mapping table in the memory, acquire, according to the label mapping table, a label corresponding to the first tenant end system, and add the label to the first packet, wherein the label mapping table comprises a correspondence between the tenant end system identifier TESID and a label.

17. The apparatus according to claim 15 or 16, wherein when the label is directly added to a packet header of the first packet, the transmitter is specifically configured to:
send, according to layer-2 forwarding without tunneling, the first packet to which the label is added to the network virtualization edge corresponding to the first tenant end system.

18. The apparatus according to claim 15 or 16, wherein when the label is added to a first packet that is after tunnel encapsulation, the transmitter is specifically configured to:
send, according to a tunnel based forwarding manner, the first packet to which the label is added to the network virtualization edge corresponding to the first tenant end system.

19. The apparatus according to any one of claims 14 to 18, wherein
the receiver is further configured to receive a second packet sent by the network virtualization edge, wherein the second packet carries the label; a source address of the second packet is the second tenant end system, and a destination address of the second packet is the first tenant end system;
the processor is further configured to process the second packet to obtain a processed second packet; and the transmitter is further configured to send the processed second packet to the first tenant end system.

20. The apparatus according to claim 19, wherein
when the second packet is a packet without tunnel encapsulation, the processor is further configured to delete the label carried in the second packet; and
when the second packet is a packet with tunnel encapsulation, the processor is further configured to decapsulate the second packet and delete the label carried in the second packet, wherein the label is carried in an inner packet header or an outer packet header of the second packet with tunnel encapsulation.

21. A packet forwarding apparatus, comprising:
a receiver, configured to receive a first packet to which a label is added and that is sent by a local management function, wherein the label is used to indicate a virtual overlay network to which the first tenant end system belongs, the first packet to which the label is added is a packet that is sent by the first tenant end system to a second tenant end system, and the first tenant end system and the second tenant end system are corresponding to different network virtualization edges;
a processor, configured to acquire, according to the label, a virtual overlay network identifier corresponding to the first tenant end system, and perform tunnel encapsulation on the first packet, wherein a first packet that is after the tunnel encapsulation carries the virtual overlay network identifier; and
a transmitter, configured to send the first packet that is after the tunnel encapsulation to a network virtualization edge corresponding to the second tenant end system.

22. The apparatus according to claim 21, wherein the processor is further configured to decapsulate the first packet that is after the tunnel encapsulation to acquire the label.

23. The apparatus according to claim 21 or 22, wherein the apparatus further comprises a memory, and the processor is specifically configured to:
determine that the label is the virtual overlay network identifier; or
search a label mapping table in the memory according to the label to acquire a virtual overlay network identifier corresponding to the label, wherein the label mapping table comprises a correspondence between a label and a virtual overlay network identifier.

24. The apparatus according to claim 23, wherein
when it is determined that the label is the virtual overlay network identifier, the processor is specifically configured to perform tunnel encapsulation on the first packet directly according to the virtual overlay network identifier; or
when the label is information that can be mapped to the virtual overlay network identifier, the processor is specifically configured to acquire the virtual overlay network identifier according to the label mapping table, delete the label from the first packet, and perform tunnel encapsulation on the first packet according to the virtual overlay network identifier.

25. The apparatus according to any one of claims 21 to 24, wherein
the receiver is further configured to receive a second packet with tunnel encapsulation sent by the network virtualization edge corresponding to the second tenant end system, wherein the second packet is a packet sent by the second tenant end system to the first tenant end system;
the processor is further configured to decapsulate the second packet with tunnel encapsulation to obtain the virtual overlay network identifier and a second packet that is after decapsulation, and process the second packet that is after the decapsulation; and
the transmitter is further configured to send the processed second packet to the local management function corresponding to the first tenant end system.

26. The method according to claim 25, wherein when the second packet that is after the decapsulation is processed, the processor is specifically configured to:
perform tunnel encapsulation on the second packet that is after the decapsulation, and add the virtual overlay network identifier to the second packet with tunnel encapsulation ; or
search the label mapping table to acquire a label corresponding to the virtual overlay network identifier, add the label to the second packet, and perform tunnel encapsulation on the second packet to which the label is added.

27. A data center network, comprising at least two tenant end systems, at least two local management functions, and at least two network virtualization edges, wherein each of the local management functions is the apparatus according to any one of claims 14 to 20, and each of the network virtualization edges is the apparatus according to any one of claims 21 to 26.
